Europäisches Patentamt

European Patent Office

Office européen des brevets

(11) Publication number: **0 187 430**
A1

# (12) EUROPEAN PATENT APPLICATION

(21) Application number: 85300119.6

(22) Date of filing: 08.01.85

(51) Int. Cl.⁴: **B 60 P 3/34**

(43) Date of publication of application:
16.07.86 Bulletin 86/29

(84) Designated Contracting States:
BE CH DE FR GB IT LI NL SE

(71) Applicant: Beggs, George
1740 Spruce Lane
Colorado Springs, CO 80906(US)

(72) Inventor: Beggs, George
1740 Spruce Lane
Colorado Springs, CO 80906(US)

(74) Representative: Sommerville, John Henry et al,
SOMMERVILLE & RUSHTON 11 Holywell Hill
St. Albans Hertfordshire, AL1 1EZ(GB)

(54) Attachment for converting a vehicle into an expandable vehicle.

(57) Collapsible vehicle attachment (10) for providing an expandable volume. The attachment is for vehicles (12) having hatchback doors (14) or the like which pivot open to expose an opening (18) as in the rear of the vehicle (12). The attachment (10) comprises a frame (20) removably secured to the vehicle (12) about the opening (18), and a collapsible hood (46) pivotally secured to the frame (20). In its closed position, the hood (46) is collapsed onto the vehicle (12) about the opening (18), and opening and closing of the hatchback door (14) is unobstructed. In the open position, the hood (46) is expanded about the hatchback opening (18) and partially supported by the hatchback door (14), such that the hood (46) defines an expandable volume communicating with the interior of the vehicle (12) through the opening (18).

./...

FIG. I

# ATTACHMENT FOR CONVERTING A VEHICLE
## INTO AN EXPANDABLE VEHICLE

This invention relates to attachments for standard type vehicles for providing an expanded volume therefor.

Structures adapted for securement to vehicles having hatchback doors for providing an expanded volume communicating with the vehicle interior through the hatchback opening are known. Two such prior art arrangements are disclosed in my prior U.S. Patent 4,132,444 and 4,223,939. While the arrangements disclosed in these patents are satisfactory for their intended purpose, they require some modification to the vehicle. For example, when used in connection with a standard hatchback type vehicle, the arrangements disclosed in these patents require removal of the hatchback door, and in U.S. Patent No. 4,132,444, further modification of the vehicle body is required.

Another prior art arrangement is disclosed in U.S. Patent No. Re.29,264 issued to Woodward. Although the structure disclosed in the Woodward patent does not require removal of the hatchback door, it has several limitations. For one, the structure is not collapsible on the vehicle when not in use. Therefore, it must be completely removed after each use, and reassembled for each subsequent use. Also, the manner of securing the covering or tent to the vehicle is not very stable comprising, as it does, a plurality of straps which extend from the tent and hook under the vehicle body. Furthermore, although the hatchback door is open during use, there is no provision for sealing along the hatchback door's pivot axis. Consequently, water and wind can enter the vehicle interior through the sapce established in the vicinity of the pivot axis when the door is open.

According to the present invention, I have developed an attachment for a vehicle having a hatchback door or its equivalent, which attachment includes a collapsible enclosure for defining an expandable volume for the vehicle about the hatchback opening without requiring removal or repositioning of the hatchback door or other substantial modification to the vehicle. The collapsible attachment of the invention is usable with those vehicles having a hatchback type door or its equivalent which pivots about an axis in the vicinity of the vehicle roof such that when the door is open it extends above the vehicle roof.

Broadly speaking, the invention comprises a collapsible enclosure; means for movably securing the enclosure to the vehicle body about the hatchback opening for movement between a closed position wherein the enclosure is collapsed on the vehicle and opening and closing of the door is unobstructed, and an open position wherein the door is open and the enclosure defines the expandable volume; and means for releasably securing the enclosure to the door when the enclosure and the door are in their respective open positions, the door thereby supporting the enclosure and defining therewith the expandable volume.

In the preferred embodiment of the invention, the attachment comprises a frame secured to the vehicle about the hatchback opening, and a collapsible enclosure comprising a flexible hood having a plurality of braces secured thereto, the braces being pivotally secured to the frame for movement between a closed position wherein the enclosure is collapsed and an open position defining the expandable volume.

The preferred frame includes a pair of lateral support memers extending along either side of the hatchback opening and continuing along the rear portion of the roof, each support member defining a channel. Preferaly, three braces are provided for supporting the hood, each preferably comprising a pair of legs and a crossbar which extend along the top and sides of the hood, respectively. Two of the braces are pivotally secured in the ends of the channels at the bottom of the hatchback opening. The legs of these two braces are preferably of substantially the same configuration and length as the support members, such that when the braces are collapsed they seat neatly in the channels. The third brace is preferably pviotally secured in the channels near the rear edge of the vehicle roof, the legs thereof also being dimensioned to collapse into the channels.

The crossbar of the third brace preferably seats agains the hatchback door when the door and hood are opened. In this manner, the door both supports the hood and defines a portion of the expandable volume. The attachment also includes a seal which overlies the pivot axis of the hatchback door to prevent water and wind from entering the vehicle interior during use.

The preferred frame includes a crossbar extending across the vehicle roof between the ends of the support members. In addition to enhancing the structural integrity of the frame, this crossbar, together with the support members, defines a storage trough on the vehicle roof for storage of the hood in its collapsed position. If desired, a fabric cover may be used to cover the frame and the hood when the attachment is collapsed, thereby protecting the hood and presenting a neat and compact appearance. To further enhance its structural integrity, the frame preferably includes another crossbar connecting the lower ends of the support members below the hatchback opening. Desirably, the frame is releasably secured to the vehicle body by a plurality of clips specifically designed for that purpose. This allows the attachment to be quickly and easily secured to the vehicle for use, thereby rendering the attachment well suited for retrofitting on existing vehicles. Removal of the attachment from the vehicle is equally facile.

Further features and advantages of the collapsible vehicle attachment in accordance with the present invention will be more fully apparent from the following detailed description and annexed drawings of the presently preferred embodiment thereof.

The present invention will now be described, by way of example, with reference to the accompanying drawings, in which:

Fig. 1 is a perspective view, partly in phantom, of the preferred attachment in accordance with the present invention;

Fig. 2 is a sectional view taken substantially along the line 2-2 in Fig. 1;

Fig. 3 is a perspective view illustrating the collapsible hood braces of the preferred attachment;

Fig. 4 is a view similar to Fig. 1 but showing the attachment partially collapsed;

Fig. 5 is a view similar to Fig. 2 showing the preferred attachment in its fully collapsed position;

Fig. 6 is a perspective view also showing the preferred attachment in its fully collapsed position;

Fig. 7 is a perspective view of a preferred clip for securing the front of the frame to the vehicle body;

Fig. 8 is a fragmentary view showing the clip of Fig. 7 in situ; and

Fig. 9 is a sectional view showing a preferred clip for securing the rear of the frame to the vehicle body.

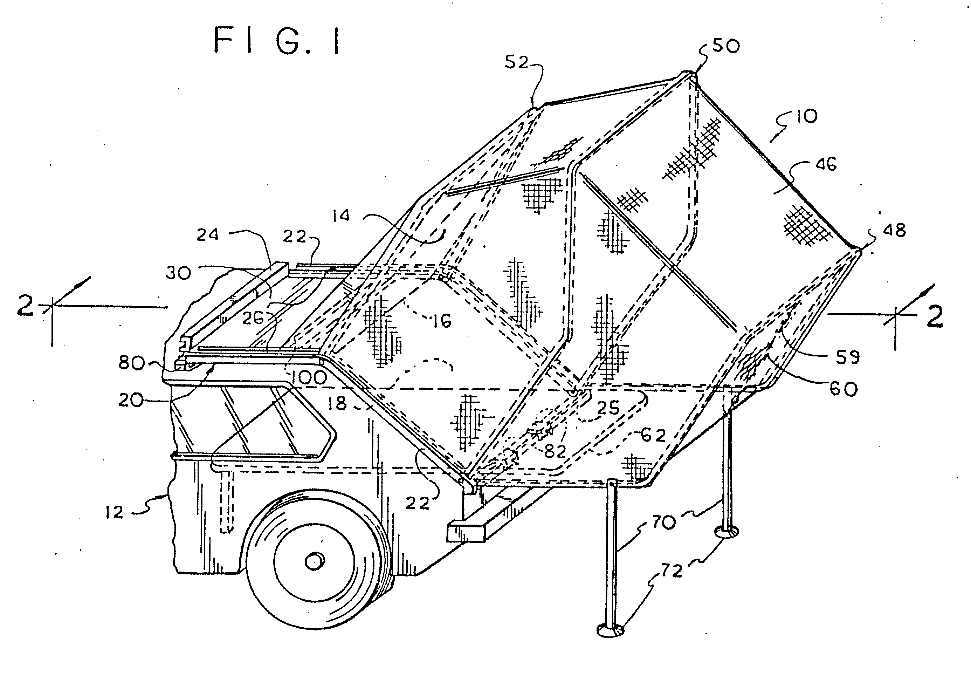

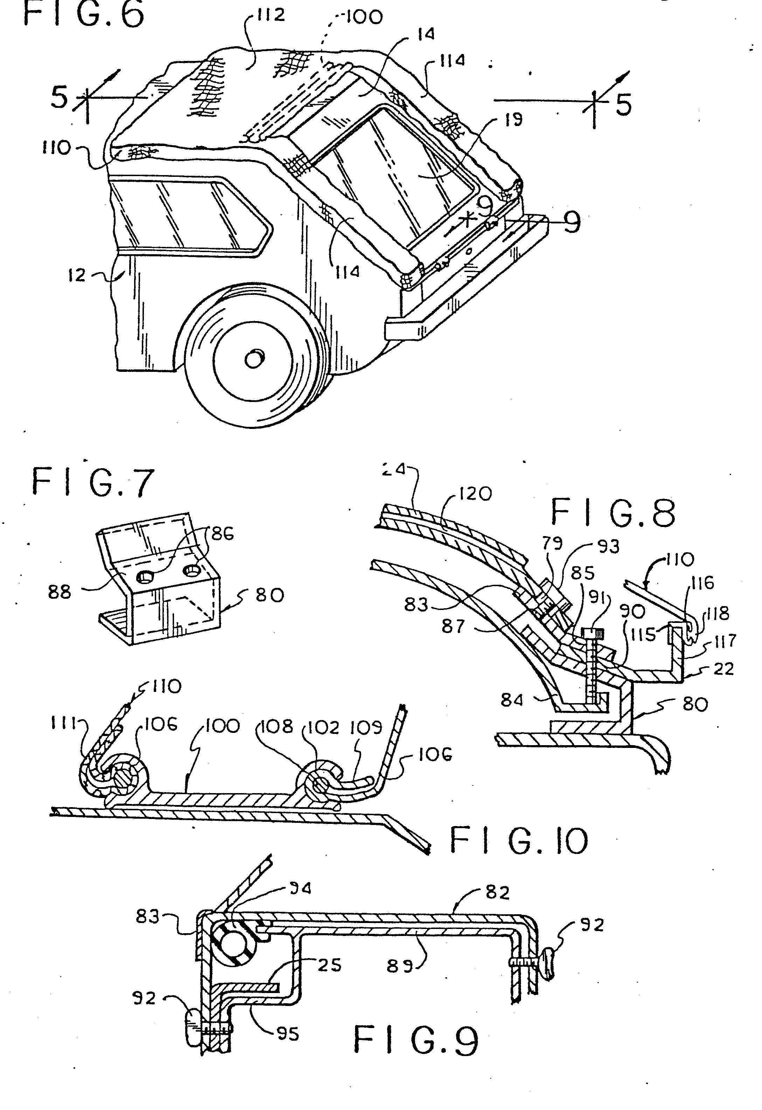

Referring now to the drawings, the preferred attachment in accordance with the present inventon is generally designated by the reference numeral 10. In the following, it will be assumed that attachment 10 is retrofitted to a standard hatchback type vehicle known as the Volkswagen Rabitt, model years 1975-1982. However, it will be apparent to those skilled in the art from this description that the attachment 10 may be retrofitted to any standard vehicle having a hatchback door or its equivalent. In the drawings, the Volkswagen Rabbit is designated by the reference numeral 12, and includes a hatchabck door 14 pivotally secured at the rear edge 16 of the vehicle roof for movement between an open position (Fig. 1) and a closed position (Fig. 6) wherein the door 14 covers the rear opening 18.

The attachment 10 includes a frame 20 secured, as by a plurality of clips to be described later, to the rear portion of the vehicle 12. The preferred frame comprises a pair of lateral support members 22 extending along either side of the opening 18 and the rear portion of the vehicle roof, a crossbar 24 extending across the vehicle roof between the forwardmost ends of the members 22, and another crossbar 25 extending between the rear ends of the members 22 beneath the opening 18. For reasons that will be apparent hereinafter, each member 22 preferably defines a continuously extending channel 26. The preferred cross section of the channel portions extending along the vehicle roof is best illustrated in Fig. 8. The preferreed cross section of the channel portions extending along the sides of the opening 18 is more generally U-shaped.  The members 22 are preferably formed from molded plastic. As will be more fully apparent hereinafter, the portion of the frame 20 disposed on the roof of the vehicle 12 defines a storage trough 30 for the collapsible portion of the attachment 10.

The bottom of the lateral support members 22 are preferably molded to conform to the vehicle body. More particularly, the bottom of the portions of the members 22 extending along the roof of the vehicle are preferably complementary to the rain gutters for seating therein, whereas the portions of the members 22 extending down the back of the vehicle are preferably complementary to the vehicle body molding on either side of the opening 18.  The crossbar 24 preferably comprises an extruded aluminum bar.  As best shown Fig. 8, the crossbar 24 is preferably contoured in conformity with the vehicle roof whereby the crossbar abuts the roof along its entire length. For reasons that will be apparent hereinafter, the upper surface of crossbar 24 has a longitudinally extending protrusion 28 (Fig. 8).  The crossbar 25 is preferably comprised of metal and has an L-shaped cross section (Fig. 9).

Referring now to Figs. 7-9, the preferred clips for securing the frame 20 to the vehicle body 12 are shown.  There are preferably two clips 80 for securing the front of the frame 20 to the roof of the vehicle 12, one on either side of the vehicle roof, and two clips 82 for securing the bottom of the frame 20 to the vehicle body 12 beneath the hatchback opening 18. The clips 80 and 82 are preferably comprised of metal, although suitable rigid plastics may be employed.

Referring to Figs. 7 and 8, each clip 80 is of irregular cross section configured to fit snugly about the rain gutter 84 of the vehicle 12. One surface 88 of each clip 80 has a pair of spaced holes 86 therein. The forwardmost portion of each member 22 has a pair of holes 90 which align with the holes 86 when the clips 80 and frame 20 are assembled on the vehicle roof. The members 22 are secured to the clips 80 as by a pair of bolts 91 extending through the aligned holes 90 and 86. As presently preferred and shown, the ends of crossbar 24 are secured to the clips 80 by intermediate angled members 83. One side of each member 83 has a pair of spaced holes 85 which align with the holes 86 and 90. The other side of each member 83 has a pair of spaced threaded holes 87 which align with a pair of spaced holes 79 in the corresponding end of the crossbar 24. As shown, the member 24 is secured to the member 83 as by a pair of bolts 93. As preferred and shown, the holes 79 are preferably somewhat enlarged to allow the crossbar 24 to be adjusted relative to the member 83 during assembly of the frame 20. The member 83 is joined to the member 22 and clip 80 by the bolds 91, which also extend through the holes 85. When the bolts 91 are tightened, their leading ends abut the rain gutter 84 thereby firmly securing the clips 80 to the rain gutters and preventing movement of the frame 20 relative to the vehicle 12.

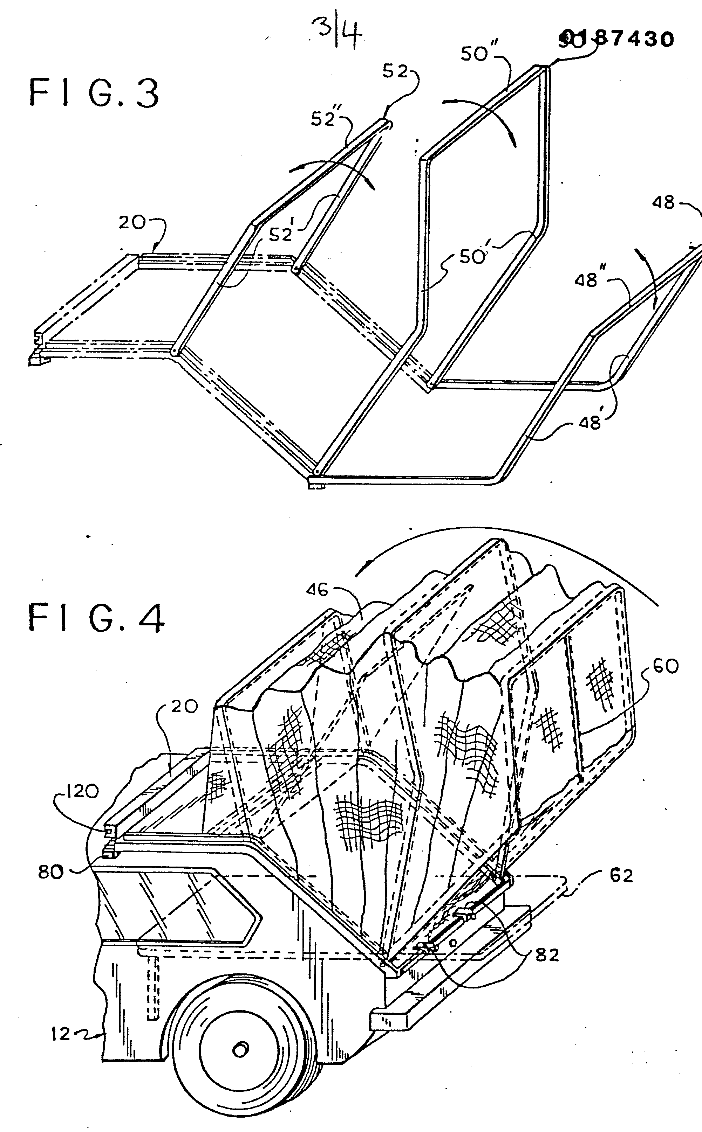

Referring now to Figs. 4 and 9, the rear clips 82 are C-shaped and dimensioned to fit over the portion of the vehicle body 12 defining the sill 89 for the hatchback door 14. When secured in place, the rear clips 82 do not interfere with the opening and closing of the hatchback door. As shown, each clip 82 is secured in place by bolts 92 which extend through holes in the legs of the clip and into the vehicle body. As shown, the rear bolt 92 also screws into the depending legs of the crossbar 25 of the frame 20. The other leg of the crossbar 25 rests on a shoulder 95 on the vehicle body.

When the clips 82 are in place, they compress the confronting portions of the usual tubular gasket 94 which seals the lower edge of the door. To replace this seal in the vicinity of the clips 82, a gasket 83 is secured to the outer surface of the rear leg of each clip. Each gasket 83 may be secured to its respective clip 82 as by an adhesive strip provided for that purpose on one side of the gasket. It will be apparent that when the hatchback door 14 is closed, the door will bear against the gaskets 83 in the vicinity of the clips 82 and that the gasket 94 will be operative along the remaining length of the sill 89.

The collapsible portion of the preferred attachment 10 comprises a collapsible enclosure including a foldable hood 46 and three supporting braces 48, 50 and 52. Each brace 48, 50, 52 includes a pair of legs 48', 50' and 52', and a crossbar 48", 50" and 52" connecting the free ends of the legs 48', 50' and 52', respectively (Figs. 3). Each brace 48, 50, 52 is preferably integrally formed of a lightweight rigid material such as aluminum tubing. For reasons that will be apparent hereinafter, the legs 48' and 50' are formed with elbows and are commonly pivotally supported at their free ends in the rearmost portions of the channels 26. As suitable means for pivotally supporting the free ends of the legs 48', 50' in the channels 26 will be readily apparent to those skilled in the art, a further description thereof is deemed unnecessary. Suffice it to say that the pivotal securing means disclosed in my prior U.S. Patent Nos. 4,132, 444 and 4,223,939 may be used herein with but minor modifications to those skilled in the art. The free ends of the legs 52' of the brace 52 are pivotally secured in the channels 26 substantially at the rear edge 16 of the roof of the vehicle 12.

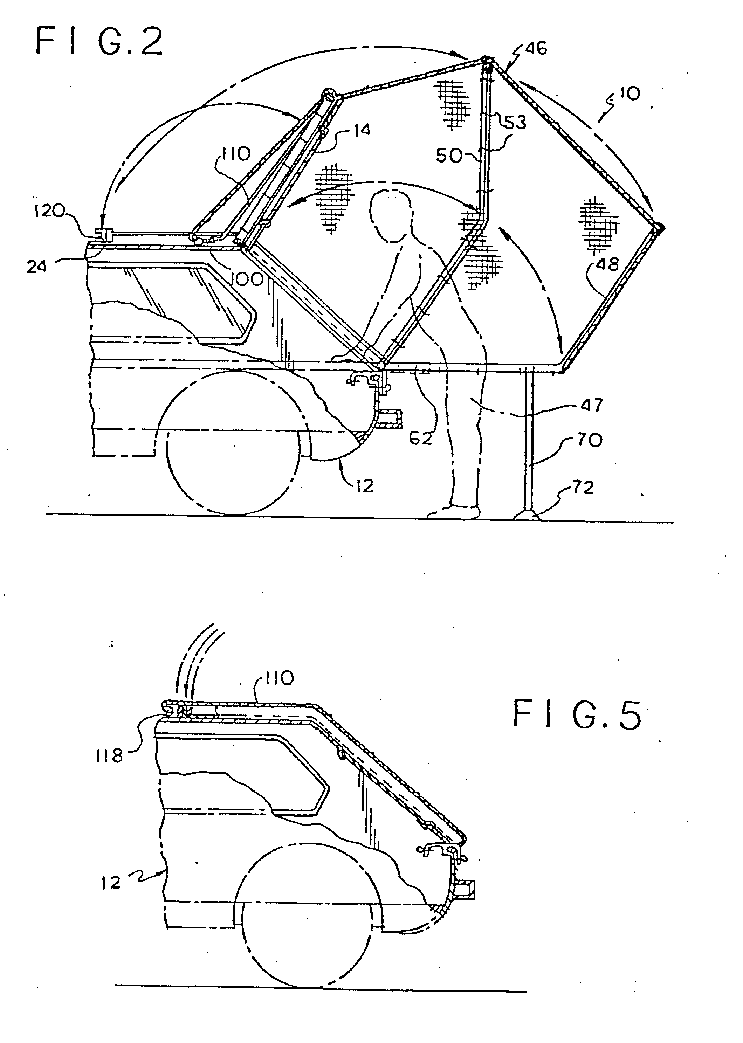

The hood 46 is preferably formed of a tightly woven lightweight fabric which both sheds water and breathes. For example, tenting nylon may be used. The braces 48, 50, 52 are joined to the inner surface of the hood 46 in any suitable manner, such as by snapped loops 53 sewn into the hood. As best shown in Figs. 1 and 2 wherein the attachment 10 is shown in its fully open position, the top of the hood 46 preferably extends from the rear edge of the vehicle roof to the crossbar 48", and the sides of the hood extend from the legs 52' to the legs 48'. The hood 46 preferably includes a rear portion 59 extending down from the crossbar 48" and terminating substantially at the elbows in the legs 48'. The space between the legs 48' extending from the elbows thereof to the rear of vehicle 12 is preferably not covered by the hood 46 thereby enabling a person 47 to stand within the enclosure defined by the attachment 10 in its open position (Fig. 1). To facilitate access to the enclosure defined by the attachment 10, and from there to the opening 18 in the rear of the vehicle 12, a zipper 60 or other closure may be provided in the rear portion 59 of the hood 46.

It will be apparent that the crossbar 50" of the brace 50 defines the highest point of the collapsible enclosure and serves to increase the head room of the enclosure defined by the attachment 10. It will also be apparent that when the atttachment 10 is in its open position, the standard hatchback door 14 of the vehicle 12 serves as a support for the crossbar 52".

If desired, and as shown Figs. 1 and 2, a sleeping pad support panel 62 similar to that disclosed in my prior U.S. Patent Nos. 4,132,444 and 4,233,939 may be used in conjunction with the attachment 10. If this is done, the rear clips 82 are preferably enlarged to serve the additional purpose of providing support for the panel 62.

As best shown in Figs. 1, 2, 4, 6 and 10 a preferably aluminum extension 100 extends across the vehicle roof in the vicinity of the rear edge 16 thereof, the longitudinal edges of the extrusion being formed with generally C-shaped grooves 102, 104. The extrusion is preferably secured at either end to the members 22 as by using an arrangement similar to that shown in Fig. 8 for securing the crossbar 24 to the members 22. The edge 106 of the hood 46 terminating at the rear edge 16 of the vehicle roof is received in the forwardmost groove 104. This may be accomplished, for example, by disposing a plastic rod 108 into a loop 109 formed at the edge 106 of hood 46, the rod being dimensioned for a snap fit in the groove 104. This arrangement, in addition to tensioning the hood 46, also seals the pivot axis of the hatchback door 14 when the attachment 10 is in its open position. Thus, when the door 14 is open, a space is established between the door and the rear edge 16 of the vehicle roof. In the absence of a seal, wind and water could enter the vehicle 12 through this space. By securing the edge 106 of the hood 46 in the extruded groove 104, it will be apparent that the hood overlies and seals this space against adverse weather.

The attachment 10 is preferably manually collapsible. This is accomplished by rotating the braces 48, 50 and 52 in a counterclockwise direction as viewed in Figs. 105 until the legs 48', 50' and 52' lie side by side in the channels 26 in the frame 20.

In the collapsed position, the crossbars 48", 50" and 52" extend across the roof of the vehicle 12 behind the crossbar 24. In the collapsed position, the top of the hood 46 folds into the trough 30, and the sides of the hood fold into the channels 26. It will now be apparent that the legs 48' and 50' are of substantially the same length and configuration as the support members 22 so that when the attachment 10 is collapsed, the legs 48', 50' seat neatly in the channels 26. For similar reasons, the legs 52' are of substantially the same length as the portion of the members 22 extending along the roof of the vehicle 12.

Referring particularly to Figs. 2, 6 and 10, attachment 10 preferably includes a waterproof fabric cover 110 which serves to protect the hood 46 and present a neat appearance when the attachment 10 is collapsed. Thus, and as best shown in Fig. 6, the cover 110 has a main portion 112 which overlies the trough 30 and the portions of the channels 26 on the vehicle roof, and two strips 114 which overlie the portions of the channels 26 which extend down the sides of the hatchback door 14.

Referring to Fig. 10, the cover 110 is secured to the extrusion 100 by securing one edge 111 of the cover 110 in the rear groove 102 of the extrusion 100. This is preferably accomplished by using the same technique used for securing the edge 106 of hood 46 in the groove 104 of the extrusion 100. When the attachment 10 is in use, the cover 110 is retained in that space between the hood 46 and door 14 (Fig. 2). When the hood 46 is collapsed, the cover 110 is secured to the frame 20 for covering the trough 30 and channels 26 (Fig. 6). While numerous techniques are available for securing the cover 110 to frame 20, mating extrusions are presently preferred. Thus, and

as best shown in Fig. 8, preferably plastic extrusions 115 are snap fitted over the entire length of the outer edges 117 of the members 22. Similar extrusions (not shown) are snap fitted along the inner edges of the portions of the members 22 on either side of the door 14. The outer surfaces of these extrusions 115 are provided with slots 116 dimensioned for a snap fit with rubber protrusions 118 secured, as by a suitable adhesive, to the confronting surfaces of the main portion 112 and strips 114 of the cover 110. Likewise, the crossbar 24 is preferably formed with an extruded slot 120 which mates with a protrusion 118 on the forward end of the main portion 112 (Fig. 5). It will thus be apparent that when the attachment 10 is collapsed, the cover 110 is secured in place by snapping the protrusions 118 into the grooves 116 and slot 120.

As best shown in Fig. 6, when the attachment 10 is collapsed, the hatchback door 14 may be closed in the usual manner, and may be used in a conventional manner to provide access to the opening 18. In the collapsed position, the driver will also have visibility through the usual window 19 in the hatchback door 14.

From the foregoing, and as noted earlier, it will be apparent that the attachment 10 may be readily retrofitted on any standard vehicle having a hatchback door or its equivalent, one of the primary advantages of the attachment 10 being that the hatchback door need not be removed to accommodate the attachment 10. Nor do any other vehicle parts, such as bumpers, have to be removed, either temporarily or otherwise, to accommodate retrofitting of the attachment 10. Of course, while the attachment 10 is preferably intended for retrofitting on existing vehicles, it may also be employed on new vehicles. Modification of the structure 10 hereinabove described may be necessary to accommodate use of the attachment on vehicles other than the Volkswagen Rabbit, model years 1975-1982. Such modifications will be apparent to the skilled art worker once this description is known.

If desired, the bending load at the elbows of legs 48' and 50' may be reduced by forming these legs of two hingedly secured members. A suitable construction for such hinges is disclosed in my prior U.S. Patent Nos. 4,132,444 and 4,223,939. Also, and as best shown in Figs. 1 and 2, a supporting leg 70 may be secured to each of the legs 48', preferably in the vicinity of the elbows, to provide additional support for the attachment 10 in its expanded or open position. The legs 70 may be removably securable to the legs 48' or may be permanently pivotally secured thereto. In the latter event, the feet 72 of the legs 70 are preferably removable whereby the legs 70 may be pivoted into alignment with the legs 48' to be collapsed therewith into the channels 26. Suitable means for securing the legs 70 to the legs 48' are well known to those skilled in the art.

Since the above as well as further changes and modifications are intended to be within the scope of the present invention, the above description should be construed as illustrative and not in the limiting sense, the scope of the invention being defined by the following claims.

0187430

CLAIMS

1.    Attachment for a vehicle body, said vehicle body defining an enclosed volume and an opening communicating with said volume, and having a hatchback type door or its equivalent, said door being secured at one edge to said vehicle in the vicinity of the roof thereof for pivotal movement between a closed position wherein said door occupies said opening and an open position wherein said door extends away from said vehicle body to expose said opening, characterized in that said attachment provides an expanded volume in communication with said enclosed volume through said opening when said door is in said open position, said attachment comprising:

a collapsible enclosure 10;

means (80, 82) for movably securing said enclosure to said vehicle body about said opening for movement between a closed position wherein said enclosure is collapsed on said vehicle and opening and closing of said door is unobstructed, and an open position wherein said door is open and said enclosure defines said expandable volume; and

means for releasably securing said enclosure to said door when said enclosure and said door are in their respective open positions, said door thereby supporting said enclosure and defining therewith said expandable volume.

2. Attachment for a vehicle body, said vehicle body defining an enclosed volume and an opening communicating with said volume, and having a hatchback type door or its equivalent, said door being secured at one edge to said vehicle in the vicinity of the roof thereof for pivotal movement between a closed position wherein said door occupies said opening and an open position wherein said door extends away from said vehicle body to expose said opening, characterized in that said attachment provides an expanded volume in communication with said enclosed volume through said opening when said door is in said open position, said attachment comprising:

a collapsible enclosure (10) comprising a flexible hood (46), at least one brace (48, 50, 52) for supporting said hood, each brace including a pair of legs (48', 50', 52') extending along opposite sides of said hood and a crossbar (40", 50", 52") connecting the upper ends of its legs and extending along the top of said hood, and a frame (20) including support members (22) securable to said vehicle body on either side of said opening, said support members being elongate and defining recesses extendable along either side of said opening, the lower ends of said brace legs being pivotally secured to said support members, and the legs of each said brace having a configuration conforming to the configuration of said support members whereby said brace legs may seat in said recesses when said enclosure is collapsed.

3. The attachment according to claim 2, characterized in that said frame further comprises means defining a storage recess adjacent said vehicle roof, said brace crossbars and a portion of said hood seating in said storage recess when said enclosure is collapsed.

4. The attachment according to claim 3, characterized in that said support members and at least a portion of said storage recess defining means are integral.

5. The attachment according to claim 3, characterized by a cover (110) removably securable to said frame in overlying relation with the recesses defined by said support members and with said storage recess, for covering said enclosure in its collapsed position.

6. The attachment according to claim 2 including a plurality of braces for supporting said hood.

7. The attachment according to claim 1, characterized in that said collapsible enclosure comprises a flexible hood (46), a plurality of said braces (48, 50, 52) secured to said hood, each brace including a pair of legs extending along opposite sides of said hood, and wherein said movable securing means comprises means for pivotally securing said brace legs to said vehicle body on either side of said opening.

8. The attachment according to claim 7, characterized in that each brace includes a crossbar connecting the upper ends of its legs and extending along the top of said hood, wherein one brace is pivotally secured to said vehicle near the top of said opening, and wherein said means for releasably securing said enclosure to said door comprises said crossbar of said one brace, said crossbar seating on the outer surface of said door when said door and said enclosure are in their respective open positions.

9. The attachment according to claim 8, characterized by: a frame (20) including a pair of support members (22) securable to said vehicle body on either side of said opening, and wherein the lower ends of said brace legs are pivotally secured to said vehicle body by pivotally securing said lower ends to said support members; wherein said support members are elongate and define channels extending along either side of said opeing and continuing along a rear portion of said roof, and wherein a second of said plurality of braces is pivotally secured to said support members substantially at the bottom of said opening, the legs of said second brace having substantially the same length as the portion of said support members extending along the roof of said vehicle, said first and second brace legs seating in said channels when said enclosure is collapsed; and wherein a third of said pluarlity of braces is commonly pivotally secured to said support members with said second brace, said third brace extending generally upward between said one brace and said other brace when said enclosure is open for supporting the central portion of said hood above said vehicle roof, said legs of said third brace also having substantially the same configuration and length as said support members for seating in said channels when said enclosure is collapsed.

10. The attachment according to claim 9, characterized in that said frame further comprises a crossbar extending across said vehicle roof and connected to said support members, said frame crossbar and the portions of said support members on said roof defining a storage trough, said brace crossbars and a portion of said hood seating in said trougoh when said enclosure is collapsed.

# FIG. 1

0187430

FIG.2

FIG.5

0187430

FIG.3

FIG.4

FIG.6

FIG.7

FIG.8

FIG.10

FIG.9

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 734 713 (CARSTENSEN)<br>* page 1, lines 15-19; figure * | 1 | B 60 P 3/34 |
| Y | DE-A-2 847 037 (BENGEL)<br>* claims 5,7; figure * | 1 | |
| A | AUTOCAR, 11th June 1977, pages 49,50, London, GB; "Hatchback home" | | |
| A | GB-A-1 196 077 (WALTER) | | |
| D,A | US-A-4 223 939 (BEGGS) | | |
| D,A | US-A-4 132 444 (BEGGS) | | **TECHNICAL FIELDS SEARCHED (Int. Cl.4)**<br><br>B 60 P 3/00 |
| D,A | US-E- 29 264 (WOODWARD) | | |

The present search report has been drawn up for all claims

| Place of search | Date of completion of the search | Examiner |
|---|---|---|
| BERLIN | 21-08-1985 | LUDWIG H J |